# EUROPEAN PATENT APPLICATION

(11) **EP 3 305 713 A1**
(43) Date of publication of application: **11.04.2018**
(21) Application number: 17195195.7
(22) Date of filing: 06.10.2017
(51) Int. Cl.: B66D 1/00, B66D 1/36, B66D 1/60

(54) **ACCESSORY MOUNTING SYSTEMS, AND METHOD FOR MOUNTING AN ACCESSORY TO A VEHICLE**

(30) Priority: 06.10.2016 US 201662405160 P; 04.10.2017 US 201715724853
(71) Applicant: Superwinch, LLC, Dayville, CT 06241 (US)
(72) Inventor: August, Jacob, Sherwood, OR Oregon 97140 (US); Dennis, Ron, Woodburn, OR Oregon 97071 (US); Frazier, Timothy, Beaverton, OR Oregon 97007 (US); Mason, Jon, Old Saybrook, CT Connecticut 06475 (US); Salmon, Scott, Dayville, CT Connecticut 06241 (US); Hargroder, Ty, Los Angeles, CA California 90069 (US); Scuito, David, Molalla, OR Oregon 97038 (US); Burns, David, Wilsonville, OR Oregon 97070 (US); Nasset, Brent, Salem, OR Oregon 97305 (US)
(74) Representative: Hoarton, Lloyd Douglas Charles

(57) **Abstract**

Accessory mounting systems (101;102) and methods therefor are disclosed. A representative accessory mounting system can include a winch (100;200) and one or more accessories (for ex: spotlights 105, a camera...) coupled to the winch. The winch (100;200) can include a frame (102;202) mountable to a vehicle, a cable drum (104;204) rotatably supported by the frame, a drive motor (106;206) operatively connected to the cable drum, and one or more mounting elements (for ex: mounting rails 120) carried by the frame. The accessories can be removably coupled to the one or more mounting elements.

## Description

### CROSS-REFERENCE TO RELATED APPLICATION

This application claims the benefit of and priority to U.S. Patent Application No. 62/405,160, filed October 6, 2016, the disclosure of which is incorporated herein by reference in its entirety.

### TECHNICAL FIELD

This present technology is directed to winches and, more specifically, to winch-based accessory mounting systems, and methods therefor.

### BACKGROUND

When an accessory is added to a vehicle, the installer must find a way to securely mount the accessory to the vehicle, route wiring, and provide a proper electrical connection to the vehicle's battery. Such an installation typically involves drilling holes in the vehicle and/or adding a mounting bracket. Wiring the accessory to the vehicle typically involves adding an inline fuse holder or running wire to a fused source on an existing fuse block of the vehicle. In any case, it can be a tedious and time consuming process to mount and provide power connections to vehicle accessories, such as compressors and spotlights.

### BRIEF DESCRIPTION OF THE DRAWINGS

Embodiments of representative winches with an integrated accessory mounting system described herein may be better understood by referring to the following Detailed Description in conjunction with the accompanying drawings, in which like reference numerals indicate identical or functionally similar elements:
FIG. 1 is a front view in elevation of an accessory mounting system according to some embodiments of the present technology;
FIG. 2 is an isometric view of the winch shown in FIG. 1;
FIG. 3 is an end view of the winch shown in FIGS. 1 and 2;
FIG. 4 is a partially exploded isometric view of the winch shown in FIGS. 1-3;
FIG. 5 is an isometric view of a winch according to some embodiments of the present technology;
FIG. 6 is a partially exploded isometric view of the winch shown in FIG. 5.

The headings provided herein are for convenience only and do not necessarily affect the scope of the embodiments. Further, the drawings have not necessarily been drawn to scale. For example, the dimensions of some of the elements in the figures may be expanded or reduced to help improve the understanding of the embodiments. Moreover, while the disclosed technology is amenable to various modifications and alternative forms, specific embodiments have been shown by way of example in the drawings and are described in detail below. The intention, however, is not to unnecessarily limit the embodiments described. On the contrary, the embodiments are intended to cover all suitable modifications, combinations, equivalents, and/or alternatives of the technology falling within the scope of this disclosure.

### DETAILED DESCRIPTION

### Overview

Accessory mounting systems are disclosed. A system in accordance with some embodiments can include a winch with a frame mountable to a vehicle's frame or bumper, for example. Various accessories (e.g., spotlights, cameras, and/or compressors) can then be mounted to the winch with one or more mounting rails attached to the frame. In some embodiments, the mounting rails can comprise standard Picatinny rails. One or more accessories can be mounted to the rails with suitable mounting brackets configured to mate with the rails. In some embodiments, the winch can include one or more power ports that are ultimately connected to the vehicle's battery. Therefore, the power ports can provide power to the auxiliary accessories or equipment mounted on the winch's mounting rails.

### General Description

Various examples of the devices introduced above will now be described in further detail. The following description provides specific details for a thorough understanding and enabling description of these examples. One skilled in the relevant art will understand, however, that the techniques and technology discussed herein may be practiced without many of these details. Likewise, one skilled in the relevant art will also understand that the technology can include many other features not described in detail herein. Additionally, some well-known structures or functions may not be shown or described in detail below so as to avoid unnecessarily obscuring the relevant description.

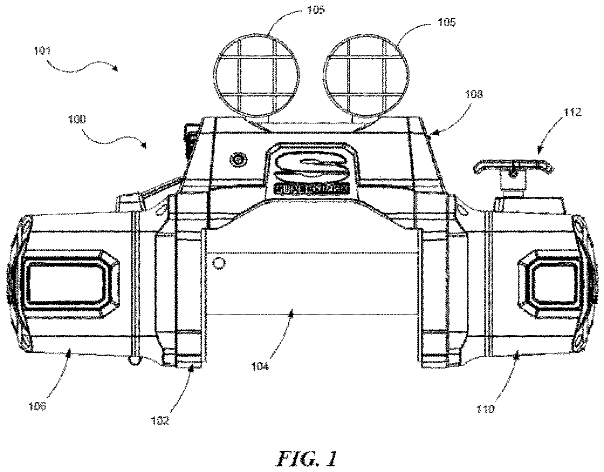

FIG. 1 illustrates an accessory mounting system 101 according to some embodiments. The accessory mounting system 101 is based on a winch 100, to which various accessories can be mounted. Representative accessories can include spotlights 105, a compressor, or a camera, for example. The winch 100 can include a frame or frame assembly 102 that supports a drive motor 106 which powers a cable drum 104. The drive motor 106 drives the drum 104 through a gear train assembly 110. A clutch mechanism 112 engages and disengages the drum 104 from the gear train assembly 110 to facilitate quickly and easily unwinding the cable from the drum 104. The drive motor 106 can be powered by a vehicle's power supply (e.g., battery). A control pack or module 108 spans across the cable drum 104 and houses control circuitry for the winch 100.

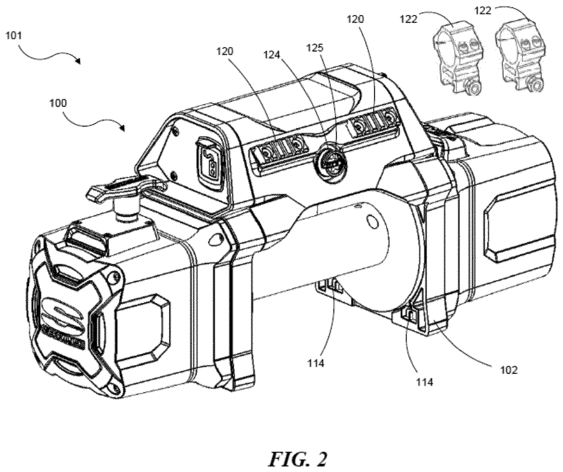

With reference to FIG. 2, the accessory mounting system 101 can include the winch 100, which is mountable to a vehicle. The frame 102 can include mounting nuts 114 for fastening the winch 100 to the vehicle's frame or bumper, for example. Various accessories can then be mounted to the winch 100 via one or more mounting elements, such as mounting rails 120. In some embodiments, the mounting rails 120 can comprise standard Picatinny rails, and in some embodiments, the mounting rails 120 can comprise other suitable rails. In some embodiments, one or more accessories can be mounted to the rails 120 with suitable mounting brackets 122 configured to mate with the rails 120. In some embodiments, the accessories can be configured to mate with the rails directly without the use of a separate mounting bracket. Although some embodiments include Picatinny rails, the disclosed technology is not limited to any particular style of mounting platform and other standard or non-standard mounting platforms can be used. For example, Weaver rail mounts, accessory brackets, or any suitable rail system from the many available truck bed or bicycle mounting rail systems can be used in some embodiments.

The winch's control module 108 can include one or more power ports 124 that can be ultimately connected to the vehicle's battery or other suitable power source. Therefore, the power ports 124 can provide power to the auxiliary accessories or equipment mounted on the winch, such as the spotlights 105 (FIG. 1), for example. In some embodiments, the power ports 124 can include an integral fuse 125. Therefore, a user can quickly and conveniently connect auxiliary equipment to the power port 124 with a mating plug and cable (not shown) without having to route additional cables to the vehicle's battery and/or provide a separate fuse block.

Accordingly, by using the disclosed accessory mounting system 101, an installer can quickly and easily securely mount an accessory using the mounting rails 120 and provide proper electrical connection to the vehicle's battery using the power port 124; all without drilling holes in the vehicle, adding mounting brackets, and/or running wire to a fused source on an existing fuse block of the vehicle.

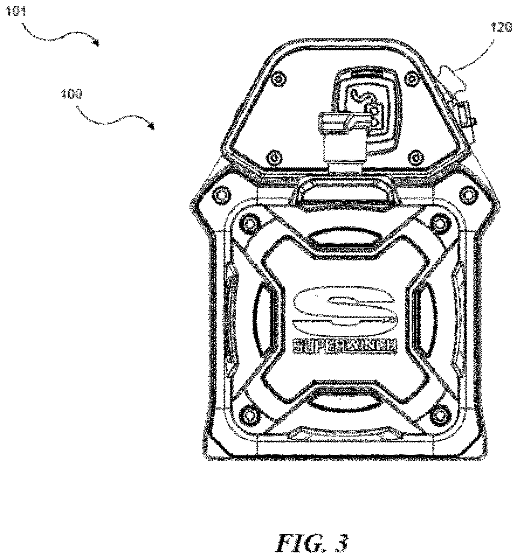

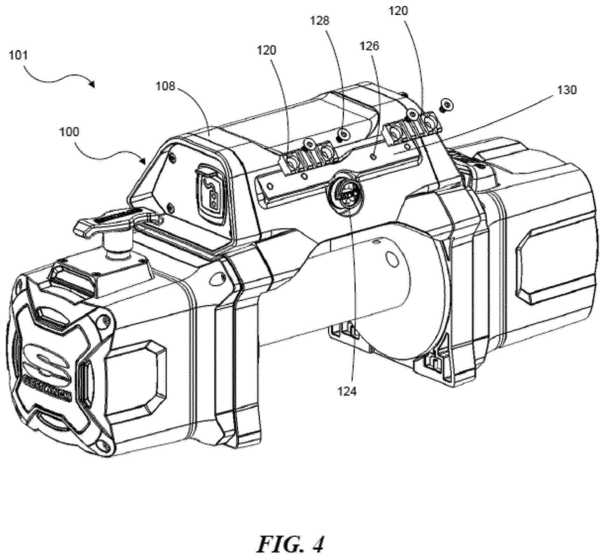

FIG. 3 is a side view of the winch 100 and mounting rails 120 illustrating the cross-sectional profile of the rails 120. As shown in FIG. 4, the mounting rails 120 can be attached to the control module 108 on a mounting pad 130 with fasteners 128 threaded into a plurality of mounting bores 126. The mounting rails 120 can be readily removed and replaced with a different rail system if necessary for compatibility with the accessories. In some embodiments, accessories can be attached directly to the winch via threaded mounting bores, such as mounting bores 126. The power port 124 can be located adjacent the mounting rails 120 to provide a convenient power connection for accessories mounted to the rails 120.

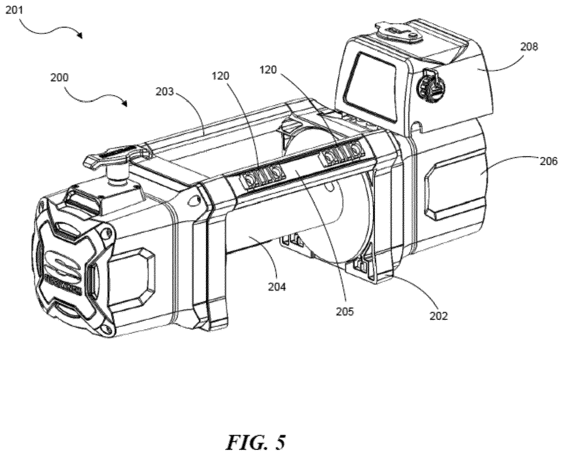

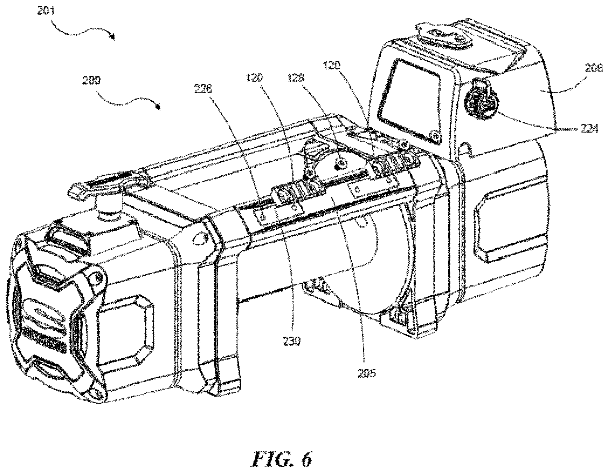

FIG. 5 illustrates a mounting rail system 201 according to some embodiments. The mounting rail system 201 is similar to that described above with respect to FIGS. 1-4; however, the winch 200 has a different configuration. In some embodiments, the winch 200 includes a control module 208 mounted to the drive motor 206, rather than spanning across the cable drum 204. The frame 202 can include a pair of cross-bars 203 and 205 to which the mounting rails 120 are attached. With further reference to FIG. 6, the mounting rails 120 can be attached to the cross-bar 205 with fasteners 128 that thread into a plurality of mounting bores 226. In some embodiments, the cross-bar 205 can include recessed regions 230 configured to receive the mounting rails 120. A power port 224 can be located on the control module 208 near the mounting rails 120 to provide a convenient power connection for accessories mounted to the rails 120.

The above-described accessory mounting systems facilitate new methods for mounting accessories to a vehicle. In some embodiments, a method of mounting an accessory to a vehicle includes mounting a winch to the frame or bumper of the vehicle; connecting the vehicle's power supply to the winch; attaching an accessory (e.g., spotlight) to mounting rails secured to the winch; and connecting the accessory to an auxiliary power port located on the winch.

One feature of accessory mounting systems having configurations in accordance with embodiments described above, is that one or more of various different types of accessories can be quickly attached to a vehicle without modifying the vehicle. An advantage of this arrangement is that different accessories, such as cameras, lights, and compressors, can be easily added and removed as the situation requires or as desired. For example, a video camera can be mounted to a vehicle (e.g., an off-road vehicle) via the disclosed accessory mounting system to document an off-road excursion. The camera can be temporarily replaced with an air compressor to adjust tire pressure as needed for trail conditions. Furthermore, the camera can be replaced by spotlights to illuminate the trail as it becomes dark.

The above description, drawings, and appendices are illustrative and are not to be construed as limiting. Numerous specific details are described to provide a thorough understanding of the disclosure. However, in some instances, well-known details are not described in order to avoid obscuring the description. Further, various modifications may be made without deviating from the scope of the embodiments.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various features are described which may be requirements for some embodiments but not for other embodiments.

The terms used in this specification generally have their ordinary meanings in the art, within the context of the disclosure, and in the specific context where each term is used. It will be appreciated that the same thing can be said in more than one way. Consequently, alternative language and synonyms may be used for any one or more of the terms discussed herein, and any special significance is not to be placed upon whether or not a term is elaborated or discussed herein. Synonyms for some terms are provided. A recital of one or more synonyms does not exclude the use of other synonyms. The use of examples anywhere in this specification, including examples of any term discussed herein, is illustrative only and is not intended to further limit the scope and meaning of the disclosure or of any exemplified term. Likewise, the disclosure is not limited to various embodiments given in this specification. Unless otherwise defined, all technical and scientific terms used herein have the same meaning as commonly understood by one of ordinary skill in the art to which this disclosure pertains. In the case of conflict, the present document, including definitions, will control.

In some embodiments, a representative accessory mounting system comprises a winch, including: a frame mountable to a vehicle; and one or more mounting rails attached to the frame; and one or more accessories removably connected to the mounting rails.

In some embodiments, a representative accessory mounting system comprises a winch, including: a frame mountable to a vehicle; a control module electrically connectable to the vehicle's power supply; a power port connected to the control module; and one or more mounting rails attached to a housing of the control module; and one or more accessories removably connected to the mounting rails and electrically connected to the power port.

In some embodiments, a representative accessory mounting system comprises a winch including a frame mountable to a vehicle, a cable drum rotatably supported by the frame, a drive motor operatively connected to the cable drum, a control module carried by the frame and electrically connectable to the vehicle's power supply, a power port carried by the control module, and one or more mounting rails carried by the frame. In some embodiments, at least one of the one or more mounting rails is attached to a housing of the control module. In some embodiments, one or more accessories can be removably coupled to the one or more mounting rails and electrically connected to the power port. In some embodiments, the one or more accessories can be removably coupled to the one or more mounting rails with mounting brackets. In some embodiments, the one or more mounting rails can comprise one or more Picatinny rails. In some embodiments, the one or more accessories can comprise at least one spotlight.

In some embodiments, a representative method for mounting an accessory to a vehicle can include mounting a winch to a vehicle, connecting a power supply of the vehicle to the winch, removably coupling an accessory to the winch, and connecting the accessory to a power port carried by the winch. In some embodiments, coupling the accessory to the winch comprises attaching the accessory to mounting rails carried by the winch. In some embodiments, the accessory is a first accessory, and further comprising removing the first accessory and coupling a second accessory to the winch.

The following examples provide additional embodiments of the present technology.

### Examples:

1. An accessory mounting system, comprising:
   a winch, including:
      a frame mountable to a vehicle;
      a cable drum rotatably carried by the frame;
      a drive motor operatively connected to the cable drum; and
      one or more mounting elements carried by the frame; and
   one or more accessories removably coupled to the one or more mounting elements.
2. The system of example 1, further comprising a power port carried by the winch.
3. The system of example 1 or 2, wherein the one or more accessories is electrically connectable to the power port.
4. The system of any one of examples 1-3, wherein the one or more mounting elements comprise one or more Picatinny rails.
5. The system of any one of examples 1-4, wherein at least one of the one or more mounting elements is attached to the frame.
6. The system of any one of examples 1-5, wherein the one or more accessories are removably coupled to the one or more mounting elements with mounting brackets.
7. An accessory mounting system, comprising:
   a winch, including:
      a frame mountable to a vehicle;
      a cable drum rotatably carried by the frame;
      a drive motor operatively connected to the cable drum;
      a control module carried by the frame and electrically connectable to the vehicle's power supply;
      a power port carried by the control module; and
      one or more mounting rails carried by the frame.
8. The system of example 7, wherein at least one of the one or more mounting rails is attached to a housing of the control module.
9. The system of example 7 or 8, further comprising one or more accessories removably coupled to the one or more mounting rails and electrically connected to the power port.
10. The system of any one of examples 7-9, wherein the one or more accessories are removably coupled to the one or more mounting rails with mounting brackets.
11. The system any one of examples 7-10, wherein the one or more mounting rails comprise one or more Picatinny rails.
12. The system any one of examples 7-11, wherein the one or more accessories comprises at least one spotlight.
13. A method for mounting an accessory to a vehicle, the method comprising:
   mounting a winch to a vehicle;
   connecting a power supply of the vehicle to the winch;
   removably coupling an accessory to the winch; and
   connecting the accessory to a power port carried by the winch.
14. The method of example 13, wherein coupling the accessory to the winch comprises attaching the accessory to mounting rails carried by the winch.
15. The method of example 13 or 14, wherein the accessory is a first accessory, and further comprising removing the first accessory and coupling a second accessory to the winch.

When used in this specification and claims, the terms "comprises" and "comprising" and variations thereof mean that the specified features, steps or integers are included. The terms are not to be interpreted to exclude the presence of other features, steps or components.

The features listed or disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An accessory mounting system, comprising:
a winch, including:
a frame mountable to a vehicle;
a cable drum rotatably carried by the frame;
a drive motor operatively connected to the cable drum; and
one or more mounting elements carried by the frame; and
one or more accessories removably coupled to the one or more mounting elements.

2. The system of claim 1, further comprising a power port carried by the winch.

3. The system of claim 2, wherein the one or more accessories is electrically connectable to the power port.

4. The system of claim 1, wherein the one or more mounting elements comprise one or more Picatinny rails.

5. The system of claim 1, wherein at least one of the one or more mounting elements is attached to the frame.

6. The system of claim 1, wherein the one or more accessories are removably coupled to the one or more mounting elements with mounting brackets.

7. An accessory mounting system, comprising:
a winch, including:
a frame mountable to a vehicle;
a cable drum rotatably carried by the frame;
a drive motor operatively connected to the cable drum;
a control module carried by the frame and electrically connectable to the vehicle's power supply;
a power port carried by the control module; and
one or more mounting rails carried by the frame.

8. The system of claim 7, wherein at least one of the one or more mounting rails is attached to a housing of the control module.

9. The system of claim 7, further comprising one or more accessories removably coupled to the one or more mounting rails and electrically connected to the power port.

10. The system of claim 9, wherein the one or more accessories are removably coupled to the one or more mounting rails with mounting brackets.

11. The system of claim 10, wherein the one or more mounting rails comprise one or more Picatinny rails.

12. The system of claim 7, wherein the one or more accessories comprises at least one spotlight.

13. A method for mounting an accessory to a vehicle, the method comprising:
mounting a winch to a vehicle;
connecting a power supply of the vehicle to the winch;
removably coupling an accessory to the winch; and
connecting the accessory to a power port carried by the winch.

14. The method of claim 13, wherein coupling the accessory to the winch comprises attaching the accessory to mounting rails carried by the winch.

15. The method of claim 13, wherein the accessory is a first accessory, and further comprising removing the first accessory and coupling a second accessory to the winch.
